# EUROPEAN PATENT APPLICATION

(11) **EP 2 996 387 A1**
(43) Date of publication of application: **16.03.2016**
(21) Application number: 14794859.0
(22) Date of filing: 02.05.2014
(51) Int. Cl.: H04W 36/04, H04W 16/32, H04W 72/04

(54) **WIRELESS COMMUNICATION SYSTEM, BASE STATION DEVICE, TERMINAL DEVICE, WIRELESS COMMUNICATION METHOD, AND INTEGRATED CIRCUIT**

(30) Priority: 08.05.2013 JP 2013098125
(71) Applicant: Sharp Kabushiki Kaisha, Osaka-shi, Osaka 545-8522 (JP)
(72) Inventor: KATO Yasuyuki, Osaka 545-8522 (JP); UEMURA Katsunari, Osaka 545-8522 (JP); TSUBOI Hidekazu, Osaka 545-8522 (JP)
(74) Representative: Müller-Boré & Partner Patentanwälte PartG mbB
(86) International application number: PCT/JP2014/062165
(87) International publication number: WO 2014/181772

(57) **Abstract**

A wireless communication system includes a first base station apparatus and a second base station apparatus, and a terminal apparatus, each of the first base station apparatus and the second base station apparatus communicating with the terminal apparatus via a plurality of cells. The first base station apparatus notifies the second base station apparatus of a message that indicates a connection change request to change a connection destination of the terminal apparatus from the second base station apparatus to a third base station apparatus. Upon receiving the message indicating the connection change request, the second base station apparatus notifies the third base station apparatus of a connection request to connect the third base station apparatus to the terminal apparatus. The second base station apparatus determines whether to include terminal information of the terminal apparatus in the message indicating the connection request, based information included in the message indicating the connection change request.

## Description

### Technical Field

The present invention relates to wireless communication systems, base station apparatuses, and terminal apparatuses. More in detail, the present invention relates to a wireless communication system, a base station apparatus, a terminal apparatus, a wireless communication method, and an integrated circuit, each related to transmission and reception control of data.

This Description claims priority to Japanese Patent Application No. 2013-098125, filed on May 8, 2013, the contents of which are hereby incorporated by reference.

### Background Art

In 3GPP (3rd Generation Partnership Project), W-CDMA system is standardized as a third-generation cellular mobile communication system, and currently in service. HSDPA having even higher communication speed is standardized and currently in service.

In 3GPP, on the other hand, advanced third generation radio access (Evolved Universal Terrestrial Radio Access, hereinafter referred to as "EUTRA") has been standardized and starts to be in service. OFDM (Orthogonal Frequency Division Multiplexing) robust to multipath interferences and suitable for high-speed transmission is adopted as a downlink communication system of EUTRA. DFT (Discrete Fourier Transform)-spread OFDM of Single Carrier-Frequency Division Multiple Access SC-FDMA is adopted as an uplink communication system in view of costs and power consumption of mobile station apparatuses. DFT-spread OFDM reduces Peak to Average Power Ratio PAPR of a transmission signal.

In 3GPP, the discussion of more advanced version of EUTRA, namely, Advanced-EUTRA has now started. In Advanced-EUTRA, it is contemplated that each of the uplink and downlink employs a band up to a maximum of 100 MHz, and that communications are performed over a transmission route having a downlink at 1 Gbps or higher at maximum, and an uplink at 500 Mbps or higher at maximum.

In Advanced-EUTRA, a maximum of 100 MHz band is contemplated by combining several bands compatible with EUTRA to accommodate mobile station apparatuses of EUTRA. Note that a band of EUTRA equal to or below 20 MHz is referred to as a component carrier (CC). The component carrier is also referred to as a cell. Combining the bands equal to or below 20 MHz is referred to a carrier aggregation (CA) (Non Patent Literature 1).

In Advanced-EUTRA, a concurrent connection to a macro cell and a small cell within the area of the macro cell is studied using a technique similar to carrier aggregation. "Within the area of the macro cell" is also intended to mean that difference frequencies are used. NPL 2 discloses another technique. According NPL 2, it is contemplated that the macro cell transmits control information (control-plane information) while the small cell transmits user information (user-plane information) in a case that the mobile station apparatus is concurrently connected to the macro cell and small cell in the communication between the base station apparatus and the mobile station apparatus. The concurrent connection of the mobile station apparatus to the macro cell and the small cell discussed in NPL 2 is also referred to as a dual connect.

### Citation List

### Non Patent Literature

NPL 1: 3GPP TS (Technical Specification) 36.300, V10.8.0 (2012-06), Evolved Universal Terrestrial Radio Access (E-UTRA) and Evolved Universal Terrestrial Radio Access Network (E-UTRAN), Overall description Stage 2
NPL 2: RWS-120010, NTT DOCOMO, "Requirements, Candidate Solutions & Technology Roadmap for LTE Rel-12 Onward", 3GPP Workshop on Release 12 and onward, Ljubljana, Slovenia, 11-12 June, 2012

### Summary of Invention

### Technical Problem

A mobile station apparatus may move and be handed over from one macro cell or small cell to another macro cell or small cell in the communication between multiple base station apparatuses and the mobile station apparatus in the dual connect disclosed in NPL 2. In such a case, a connection change operation needs to be performed efficiently between the base station apparatuses and between the base station apparatus and the mobile station apparatus while communications are maintained.

The present invention has been developed in view of such an aspect, and is intended to provide a mobile station apparatus, a base station apparatus, a wireless communication system, a wireless communication method, and an integrated circuit to efficiently perform the connection change operation between the base station apparatuses and between the base station apparatus and the mobile station apparatus in a case that the base station apparatus of the macro cell or the base station apparatus of the small cell connected to the mobile station apparatus is changed during the dual connect.

### Solution to Problem

(1) To achieve the object, the present invention relates to a wireless communication system in one aspect. The wireless communication system includes a first base station apparatus, a second base station apparatus, and a terminal apparatus, each of the first base station apparatus and the second base station apparatus communicating with the terminal apparatus via a plurality of cells. The first base station apparatus notifies the second base station apparatus of a message that indicates a connection change request to change a connection destination of the terminal apparatus from the second base station apparatus to a third base station apparatus. Upon receiving the message indicating the connection change request, the second base station apparatus notifies the third base station apparatus of a connection request to connect to the terminal apparatus. The second base station apparatus determines whether to include terminal information of the terminal apparatus in the message indicating the connection request, based information included in the message indicating the connection change request.
(2) In the wireless communication system according to another aspect, the second base station apparatus may determine whether to include encryption key information in the message indicating the connection request based on the information included in the message indicating the connection change request.
(3) According to another aspect of the present invention, a base station apparatus, together with a first base station, communicates with a terminal apparatus via a plurality of cells. The base station apparatus notifies the first base station apparatus of a message indicating a connection change request to change a connection destination of the terminal apparatus from the first base station apparatus to a second base station apparatus. The base station apparatus includes, in the message, information as to whether to notify the second base station apparatus of terminal information.
(4) According to another aspect of the present invention, a base station apparatus, together with a first base station apparatus, communicates with a terminal apparatus via a plurality of cells. Upon receiving from the first base station apparatus a message indicating a connection change request to change a connection destination of the terminal apparatus from the base station apparatus to a second base station apparatus, the base station apparatus notifies the second base station apparatus of a message indicating a connection request to connect to the terminal apparatus. The base station apparatus determines whether to include terminal information in the message indicating the connection request based on information included in the message indicating the connection change request.
(5) According another aspect of the present invention, a terminal apparatus communicates with each of a first base station apparatus and a second base station apparatus via a plurality of cells. Upon receiving a hand-over instruction message indicating a change of a cell of the first base station apparatus, the terminal apparatus resets a parameter of a MAC layer related to the cell of the first base station apparatus, but does not reset a parameter of the MAC layer related to a cell of the second base station apparatus.
(6) According to another aspect of the present invention, a wireless communication method of a wireless communication system including a first base station apparatus, a second base station apparatus, and a terminal apparatus, each of the first base station apparatus and the second base station apparatus communicating with the terminal apparatus via a plurality of cells, includes a step of the first base station apparatus of notifying the second base station apparatus of a message that indicates a connection change request to change a connection destination of the terminal apparatus from the second base station apparatus to a third base station apparatus, a step of the second base station apparatus of notifying the third base station apparatus of a connection request to connect to the terminal apparatus, in response to receiving the message indicating the connection change request, and a step of the second base station apparatus of determining whether to include terminal information of the terminal apparatus in the message indicating the connection request, based information included in the message indicating the connection change request.
(7) According to another aspect of the present invention, an integrated circuit to be applied to a base station apparatus that, together with a first base station apparatus, communicates with a terminal apparatus via a plurality of cells, includes a unit that notifies the first base station apparatus of a message indicating a connection change request to change a connection destination of the terminal apparatus from the first base station apparatus to a second base station apparatus, and a unit that includes, in the message, information as to whether to notify the second base station apparatus of terminal information.
(8) According to another aspect of the present invention, an integrated circuit to be applied to a base station apparatus that, together with a first base station apparatus, communicates with a terminal apparatus via a plurality of cells, includes a unit that notifies a second base station apparatus of a message indicating a connection request to connect to the terminal apparatus, in response to receiving from the first base station apparatus a message indicating a connection change request to change a connection destination of the terminal apparatus from the base station apparatus to the second base station apparatus, and a unit that determines whether to include terminal information in the message indicating the connection request based on information included in the message indicating the connection change request.
(9) According to another aspect of the present invention, an integrated circuit to be applied to a terminal apparatus that communicates with each of a first base station apparatus and a second base station apparatus via a plurality of cells, includes a unit that resets a parameter of a MAC layer related to a cell of the first base station apparatus, in response to receiving a hand-over instruction message indicating a change of the cell of the first base station apparatus, and a unit that does not reset a parameter of the MAC layer related to a cell of the second base station apparatus in response to receiving the hand-over instruction message indicating the change of the cell of the first base station apparatus.

### Advantageous Effects of Invention

According to an aspect of the preset invention, an efficient cell change may be carried out between the base station apparatuses and between the base station apparatus and the mobile station apparatus.

### Brief Description of Drawings

[Fig. 1] Fig. 1 illustrates a configuration example of a mobile station apparatus of an embodiment of the present invention.
[Fig. 2] Fig. 2 illustrates a configuration example of a base station apparatus of the embodiment of the present invention.
[Fig. 3] Fig. 3 illustrates an example of a dual connect change.
[Fig. 4] Fig. 4 illustrates an example of the dual connect change procedure.
[Fig. 5] Fig. 5 illustrates an example of the dual connect change.
[Fig. 6] Fig. 6 illustrates an example of a hand-over.
[Fig. 7] Fig. 7 illustrates an example of a hand-over procedure.
[Fig. 8] Fig. 8 illustrates an example of a physical channel structure in EUTRA
[Fig. 9] Fig. 9 illustrates an example of a downlink channel structure in EUTRA.
[Fig. 10] Fig. 10 illustrates an example of an uplink channel structure in EUTRA.
[Fig. 11] Fig. 11 illustrates an example of a communication protocol related to control information of the base station apparatus and the mobile station apparatus.
[Fig. 12] Fig. 12 illustrates an example of a structure of a communication protocol related to user information of the base station apparatus and the mobile station apparatus.
[Fig. 13] Fig. 13 illustrates an example of a contention-based random access procedure.
[Fig. 14] Fig. 14 illustrates an example of a non-contention-based random access procedure.
[Fig. 15] Fig. 15 illustrates an example of a hand-over procedure.
[Fig. 16] Fig. 16 illustrates an example of a dual connect.

### Description of Embodiments

OFDM is adopted for the downlink of EUTRA. An OFDM single carrier communication system of DFT-spread OFDM is adopted for the uplink EUTRA.

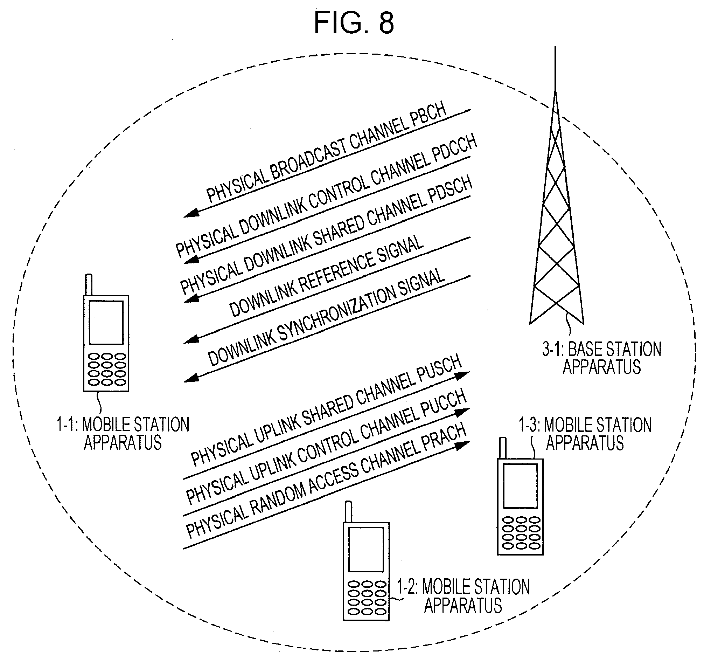

Fig. 8 illustrates a physical channel structure of EUTRA. The physical downlink channels includes a physical downlink shared channel PDSCH, a physical downlink control channel PDCCH, and a physical broadcast channel PBCH. The downlink physical channels further includes physical signals including a downlink synchronization signal and a downlink reference signal (NPL 1).

The physical uplink channels include a physical random access channel PRACH, a physical uplink shared channel PUSCH, and a physical uplink control channel PUCCH (NPL1).

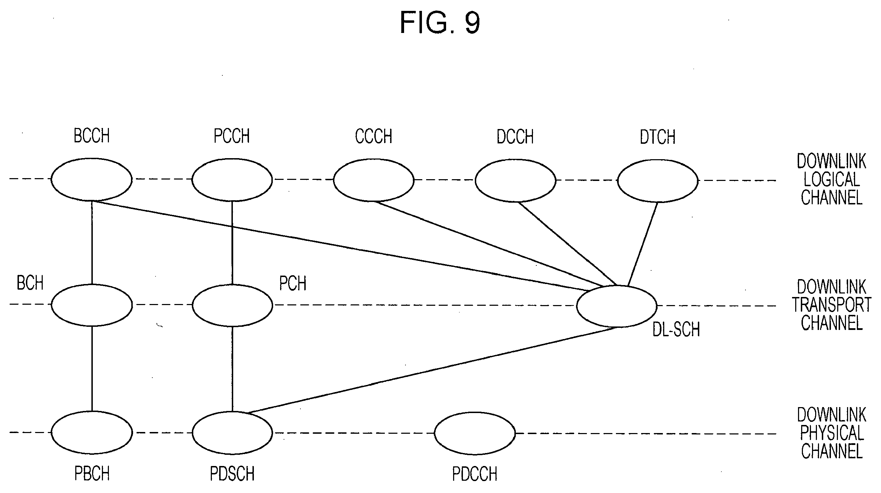

Fig. 9 illustrates a downlink channel structure of EUTRA. The downlink channels of Fig. 9 include logical channels, transport channels, and physical channels. The logical channel defines the type of a data transmission service transmitted and received at a medium access control (MAC) layer. The transport channel defines the characteristics of data transmitted via a radio interface, and the manner of how the data is transmitted. The physical channel conveys the data transmitted at the physical layer by the transport channel.

The physical downlink channels include a broadcast control channel BCCH, a paging control channel PCCH, a common control channel CCCH, a dedicated control channel DCCH, and a dedicated traffic channel DTCH.

The downlink transport channels include a broadcast channel BCH, a paging channel PCH, and a downlink shared channel DL-SCH.

The physical downlink channels include the physical broadcast channel PBCH, the physical downlink control channel PDCCH, and the physical downlink shared channel PDSCH. These channels are used to transmit and receive information between the base station apparatus and the mobile station apparatus.

The logical channels are now described. The broadcast control channel BCCH is a downlink channel configured to broadcast system control information. The paging control channel PCCH is a downlink channel configured to transmit paging information, and is used in a case that the network does not recognize a cell location of the mobile station apparatus. The common control channel CCCH is a channel configured to exchange control information between the mobile station apparatus and the network, and is used by a mobile station apparatus that has no radio resource control (RRC) connection with the network.

The dedicated control channel DCCH is a point-to-point bi-directional channel, and is used to transmit individual control information between the mobile station apparatus and the network. The dedicated control channel DCCH is used by a mobile station apparatus having an RRC connection. The dedicated traffic channel DTCH is a point-to-point bidirectional channel, dedicated to a single mobile station apparatus, and used to transfer user information (unicast data).

The transport channels are then described. The broadcast channel BCH is broadcast to the entire cell in a transmission protocol that is fixed and defined in advance. The downlink shared channel DL-SCH supports hybrid automatic repeat request (HARQ), dynamically adapted radio link control, and discontinuous reception (DRX), and needs to be broadcast to the entire cell.

The paging channel PCH supports DRX and needs to broadcast to the entire cell. Also, the paging channel PCH is mapped to a physical resource that is dynamically used in a traffic channel or another control channel, namely, mapped to the physical downlink shared channel PDSCH.

The physical channels are then described below. The physical broadcast channel PBCH maps the broadcast channel BCH with a 40 millisecond period. The physical downlink control channel PDCCH is used to notify the mobile station apparatus of the resource allocation of the physical downlink shared channel PDSCH, hybrid automatic repeat request (HARQ) information of the downlink data, uplink grant for the resource allocation of the physical uplink shared channel PUSCH. The physical downlink shared channel PDSCH is used to transmit the downlink data or the paging information.

The channel mapping is described below. Referring to Fig. 9, the transport channels and the physical channels are mapped in the downlink as described below. The broadcast channel BCH is mapped to the physical broadcast channel PBCH. The paging channel PCH and the downlink shared channel DL-SCH are mapped to the physical downlink shared channel PDSCH. The physical downlink control channel PDCCH is used alone as a physical channel.

In the downlink, the logical channels are mapped to the transport channels as described below. The paging control channel PCCH is mapped to the paging channel PCH. The broadcast control channel BCCH is mapped the broadcast channel BCH and the downlink shared channel DL-SCH. The common control channel CCCH, the dedicated control channel DCCH, and the dedicated traffic channel DTCH are mapped to the downlink shared channel DL-SCH.

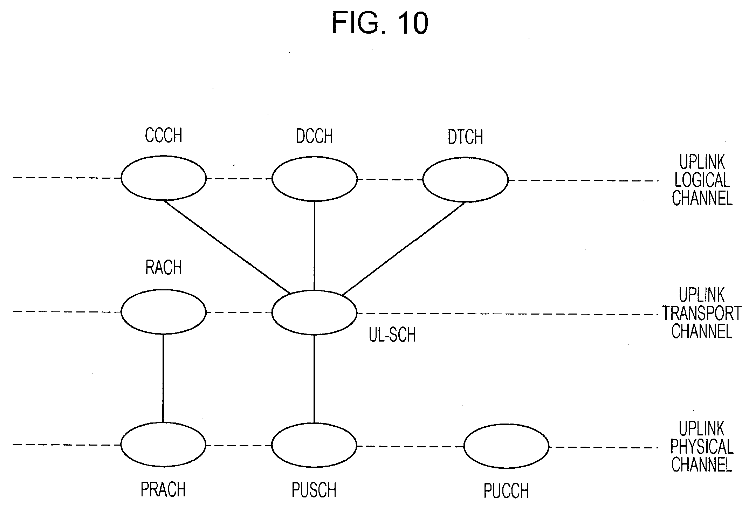

Fig. 10 illustrates an example of an uplink channel structure in EUTRA. The uplink channels of Fig. 10 include logical channels, transport channels, and physical channels. The definition of each channel remains unchanged from each channel in the downlink channel.

The uplink logical channels include the common control channel CCCH, the dedicated control channel DCCH, and the dedicated traffic channel DTCH.

The uplink transport channels include an uplink shared channel UL-SCH, and a random access channel RACH.

The uplink physical channels include the physical uplink control channel PUCCH, the physical uplink shared channel PUSCH, and the physical random access channel PRACH. These channels are used to transmit and receive information between the base station apparatus and the mobile station apparatus. Note that the physical random access channel PRACH is used to transmit a random access preamble to acquire transmission timing information mainly from the mobile station apparatus to the base station apparatus. The transmission of the random access preamble is performed in a random access procedure.

The logical channels are described next. The common control channel CCCH is used to transmit control information between the mobile station apparatus and the network. The common control channel CCCH is used by a mobile station apparatus having no radio resource control (RRC) connection with the network.

The dedicated control channel DCCH is a point-to-point bidirectional channel, and is used to transmit individual control signal between the mobile station apparatus and the network. The dedicated control channel DCCH is used by a mobile station apparatus having an RRC connection. The dedicated traffic channel DTCH is a point-to-point bidirectional channel, is a channel dedicated to a single mobile station apparatus, and is used to transfer user information (unicast data).

The transport channels are described below. The uplink shared channel UL-SCH supports HARQ (Hybrid Automatic Repeat Request), dynamically adapted radio link control, and discontinuous transmission (DTX). The random access channel RACH transmits limited control information.

The physical channels are described. The physical uplink control channel PUCCH is used to notify the base station apparatus of response information (ACK/NACK) responsive to the downlink data, downlink radio quality information, and transmission request (scheduling request) of the uplink data. The physical uplink shared channel PUSCH is used to transmit the uplink data. The physical random access channel is used to transmit a random access preamble.

The channel mapping is described below. Referring to Fig. 10, the mapping is performed between the transport channels and the physical channels in the uplink as described below. The uplink shared channel UL-SCH is mapped to the physical uplink shared channel PUSCH. The random access channel RACH is mapped to the physical random access channel PRACH. The physical uplink control channel PUCCH is used alone as a physical channel.

In the uplink, the logical channels and the transport channels are mapped as described below. The common control channel CCCH, the dedicated control channel DCCH, and the dedicated traffic channel DTCH are mapped to the uplink shared channel UL-SCH.

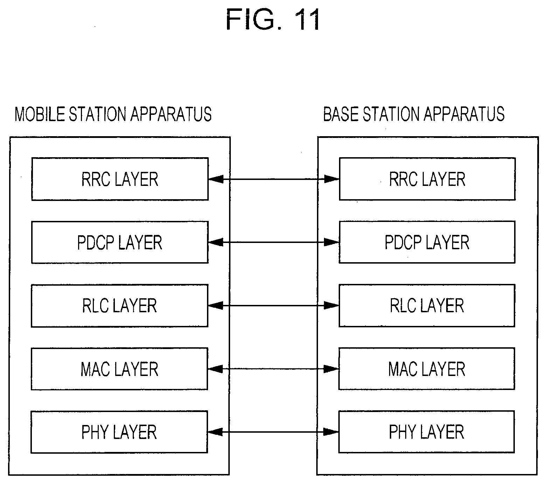

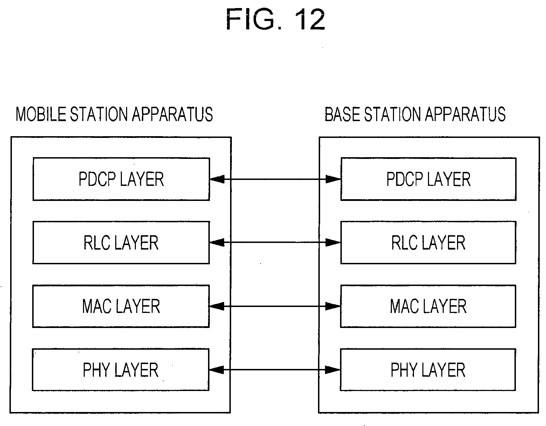

Fig. 11 illustrates a protocol stack handling the control data of the mobile station apparatus and the base station apparatus of EUTRA. Fig. 12 illustrates a protocol stack handling the user data of the mobile station apparatus and the base station apparatus of EUTRA. The protocol stack is described with reference to Fig. 11 and Fig. 12.

The physical layer (PHY layer) provides a transmission service to a higher layer using a physical channel. The PHY layer is connected to a medium access control (MAC) layer at a higher layer via the transport channel. Data moves via the transport channel between the MAC layer and the PHY layer. Data is transmitted and received between the PHY layers of the mobile station apparatus and the base station apparatus.

The MAC layer maps a variety of logical channels to a variety of transport channels. The MAC layer is connected a radio link control (RLC) layer at a higher layer via the logical channel. The logical channels are largely divided into a control channel configured to transmit control signal and a traffic channel configured to transmit user information according to the type of transmitted information. The MAC layer has a control function of controlling the PHY layer to perform discontinuous reception and discontinuous transmission (DRX and DTX), a function of notifying information related to transmission power, a function of HARQ controlling, and other functions.

The MAC layer also has a function of notifying an amount of data of a transmission buffer corresponding to each logical channel. This function is referred to as a buffer status report (BSR). In BSR, each logical channel is assigned to a logical channel group (LCG). The MAC layer notifies the base station apparatus of a transmission amount of buffer to each LCG as a message of the MAC layer. As a trigger condition of BSR, BSR is triggered and is notified at the moment a timer completes one period.

The RLC layer segments data received from a higher layer (segmentation) or concatenates data received from the higher layer (concatenation), thereby adjusting the data size to appropriately transmit data in a lower layer. The RLC layer also has a function of guaranteeing QoS (Quality of Service) requested by each piece of data. More specifically, the RLC layer has a function of retransmission control of the data.

The packet data convergence protocol (PDCP) layer has a function of compressing a header to compress unwanted control information to efficiently transmit an IP packet as the user data between wireless regions. Also, the PDCP layer has a function of encrypting data.

A radio resource control (RRC) layer defines control information only. The RRC layer configures and reconfigures radio bearers (RBs), and performs control of the logical channel, the transport channel, and the physical channel. RB is divided into a signaling radio bearer (SRB) and a data radio bearer (DRB). SRB is used as a path through which an RRC message as the control information is transmitted. DRB is used as a path to transmit the user information. Each RB is configured between the RRC layers of the base station apparatus and the mobile station apparatus.

In a layer structure of a typically known open system interconnection (OSI) model, the PHY layer corresponds to a physical layer as a first layer, and the MAC layer, the RLC layer, and the PDCP layer correspond to a data link layer as a second layer of the OSI model, and the RRC layer corresponds to a network layer as a third layer of the OSI model.

A random access procedure is described below. Two random access procedures are available, namely, a contention based random access procedure and a non-contention based random access procedure (NPL 1).

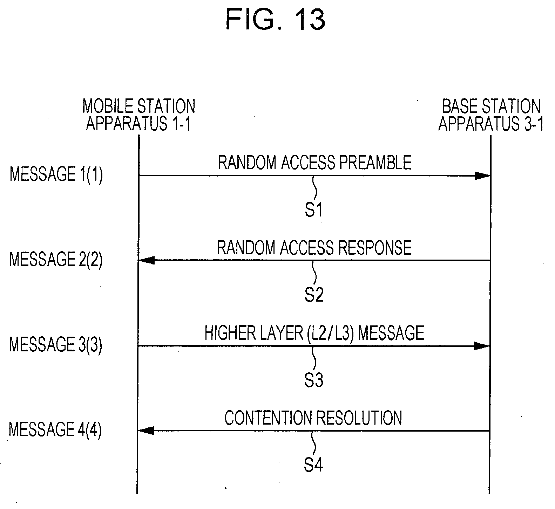

Fig. 13 illustrates the contention based random access procedure. The contention based random access procedure is a random access procedure in which one mobile station apparatus might contend with another mobile station apparatus. The contention based random access procedure is performed in a scheduling request during an initial access in succession to a state that no connection (no communication) is established with the base station apparatus, or in the scheduling request in a case that an uplink data transmission occurs in the mobile station apparatus with the base station apparatus connected but out of the uplink synchronization.

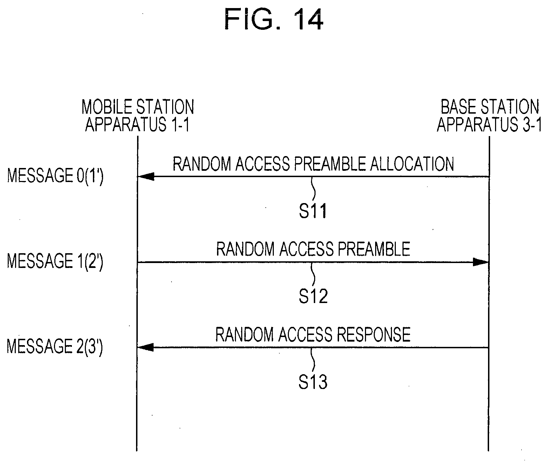

Fig. 14 illustrates the non-contention based random access procedure. In the non-contention based random access procedure, no contention occurs between the mobile station apparatuses. No synchronization may now be established in the uplink with the base station apparatus remaining connected to the mobile station apparatus. In order to quickly establish uplink synchronization between the mobile station apparatus and the base station apparatus, the mobile station apparatus starts a random access procedure in response to an instruction from the base station apparatus in a special case that hand-over or the transmission timing of the mobile station apparatus is not effective. An instruction to perform the non-contention based random access procedure is provided by the message of RRC (Radio Resource Control: Layer 3) layer and the control of the physical downlink control channel PDCCH.

Referring to Fig. 13, the contention based random access procedure is briefly described. First, a mobile station apparatus 1-1 transmits a random access preamble to a base station apparatus 3-1 (message 1: (1), step S1). Upon receiving the random access preamble, the base station apparatus 3-1 transmits to the mobile station apparatus 1-1 a response to the random access preamble (random access response) (message 2: (2), step S2). The mobile station apparatus 1-1 transmits to higher layers (Layer 2 / Layer 3) a message based on scheduling information included in the random access response (message 3: (3), step S3). The base station apparatus 3-1 transmits a contention check message to the mobile station apparatus 1-1 having received the higher layer message (3) (message 4: (4), step S4). The contention based random access is also referred to as a random preamble transmission.

The non-contention based random access procedure is briefly described with reference to Fig. 14. The base station apparatus 3-1 notifies the mobile station apparatus 1-1 of a preamble number (or a sequence number) and a random access channel number to be used (message 0: (1)', step S11). The mobile station apparatus 1-1 transmits to a specified random access channel RACH the random access preamble of the specified preamble number (message 1: (2)', step S12). The base station apparatus 3-1 having received the random access preamble transmits to the mobile station apparatus 1-1 a response to the random access preamble (the random access response) (message 2: (3)', step S13). However, if the value of the notified preamble number is 0, the contention based random access procedure is performed. Note that the non-contention based random access procedure is also referred to as a dedicated preamble transmission.

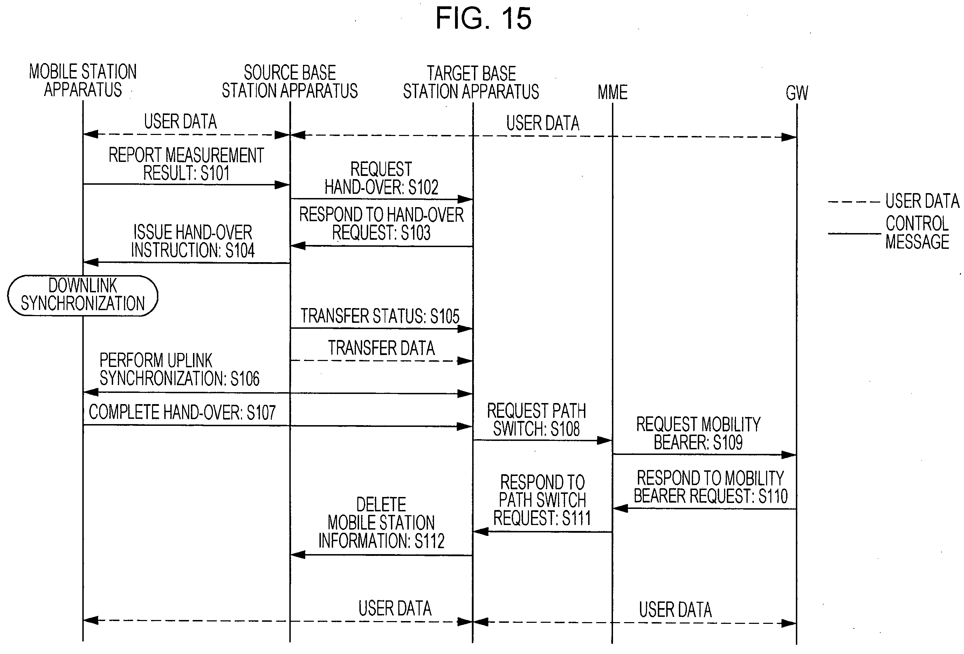

The hand-over procedure is described with reference to Fig. 15. The base station apparatus serving as a hand-over source is referred to as a source base station apparatus, and the base station apparatus serving as a hand-over destination is referred to as a target base station apparatus. The mobile station apparatus measures radio quality of a neighbor cell on a coverage frequency and on a neighbor frequency, notifies the source base station apparatus of a measurement report message including a radio quality measurement results (step S101). The source base station apparatus determines whether to perform the hand-over, based on the measurement results of the mobile station apparatus. In a case that the hand-over is performed, the source base station apparatus decides the target base station apparatus as the hand-over target, and notifies the target base station apparatus as the hand-over target of a hand-over request message (step S102).

The hand-over request message includes information needed in the hand-over in the target base station apparatus. The information needed in the hand-over includes information of the mobile station apparatus including C-RNTI of the RRC layer lever of the source base station apparatus, information of the mobile station apparatus at a layer level higher than the RRC layer, encryption key information, and a MAC address of the mobile station apparatus.

Upon granting the hand-over, the target base station apparatus serving as a hand-over destination notifies the source base station apparatus serving as a hand-over source of a hand-over request response message (step S103). The hand-over request response message includes a radio parameter of the cell of the target base station apparatus, and information that the target base station apparatus allocates to the mobile station apparatus. The information allocated includes uplink radio resource information, preamble information to perform a random access procedure during the hand-over, new C-RNTI to the mobile station apparatus, information related to an encryption key, and configuration information of from the MAC layer to the RRC layer.

Upon receiving the hand-over request response message, the source base station apparatus notifies the mobile station apparatus of a hand-over instruction message (step S104). The hand-over instruction message includes a radio parameter of the cell of the target base station apparatus included in the hand-over request response message and the information that the target base station apparatus allocates to the mobile station apparatus.

Upon notifying the hand-over instruction message, the source base station apparatus notifies the target base station apparatus of a status transfer message including the user data information of the mobile station apparatus (step S105). The source base station apparatus transfers to the target base station apparatus the user data of the mobile station apparatus stored thereon. Upon receiving the hand-over instruction message, the mobile station apparatus establishes downlink synchronization to the target base station apparatus.

The process of the mobile station apparatus at the reception of the hand-over instruction message includes, in addition to the downlink synchronization operation to the cell of the target base station apparatus, a reset operation of a parameter of the MAC layer having operated in relation to the source base station apparatus, and configuration operation of parameters of the MAC layer, the RLC layer, the PDCP layer, and the RRC layer of the target base station apparatus.

In response to the completion of the downlink synchronization, the mobile station apparatus performs the random access procedure to synchronize the uplink with the target base station apparatus (step S106). The base station apparatus receives a random access response message from the target base station apparatus, and acquires the uplink transmission timing for the uplink synchronization. The mobile station apparatus notifies the target base station apparatus of a hand-over completion message (step S107).

Upon receiving the hand-over completion message, the target base station apparatus notifies MME (Mobility Management Entity) of a path switch request message because the base station apparatus connected to the mobile station apparatus is changed (step S108). The path switch request message requests the data path to be changed from the source base station apparatus to the target base station apparatus. Upon receiving the path switch request message, the MME notifies a gateway (GW) of a mobility bearer request message (step S109).

Upon receiving the mobility bearer request message, the GW switches the data path of user data of the mobile station apparatus from the source base station apparatus to the target base station apparatus. The GW notifies the MME of a mobility bearer request response message (step S110). The MME notifies the target base station apparatus of a path switch request response message (step S111). Upon receiving the path switch request response message, the target base station apparatus notifies the source base station apparatus of a mobile station information release message indicating the release of information of the mobile station apparatus (mobile station information and UE context) to the source base station apparatus (step S112). Upon receiving the mobile station information release message, the source base station apparatus releases information of the mobile station apparatus handed over to the target base station apparatus.

In 3GPP, Advanced-EUTRA as a more advanced version of EUTRA has been discussed. In Advanced-EUTRA, the use of up to a maximum of 100 MHz band in each of the uplink and down link is considered to achieve communications at a rate of a maximum of 1 Gbps or higher in the downlink, and 500 Mbps or higher in the uplink.

It is contemplated in Advanced-EUTRA that multiple bands of EUTRA equal to or below 20 MHz are combined to accommodate the mobile station apparatus of EUTRA to achieve a maximum of 100 MHz band. In Advanced-EUTRA, a single band of EUTRA equal to or below 20 MHz is referred to as a component carrier (CC) (NPL 1). A single downlink component carrier and a single uplink component carrier are combined to form a single cell. Note that a single cell may be formed by a single downlink component carrier alone.

A single base station apparatus allocates multiple cells to a mobile station apparatus matching the communication capability and communication conditions of the mobile station apparatus, and communicates with the mobile station apparatus via the allocated multiple cells. The multiple cells allocated to the mobile station apparatus are categorized into a primary cell (PCell) and secondary cells as the other cells (SCells). The primary cell is provided with a particular function such as the allocation of the physical uplink control channel PUCCH.

In order to reduce the power consumption of the mobile station apparatus, the mobile station apparatus does not perform a reception operation in the downlink in the second cell immediately subsequent to the allocation (or does not follow the radio resource allocation information specified by the physical downlink control channel PDCCH). In response to the activation instruction from the base station apparatus, the mobile station apparatus starts a reception operation in the downlink to the secondary cell that the base station apparatus has instructed to be activated (or follows the radio resource allocation information specified by the physical downlink control channel PDCCH).

After the base station apparatus instructs the activated secondary cell to be deactivated, the mobile station apparatus suspends the reception operation in the downlink in the secondary cell instructed to be deactivated (or does not follow the radio resource allocation information specified by the physical downlink control channel PDCCH). Note that the secondary cell that the base station apparatus has instructed to be activated, and performs the reception operation in the downlink is referred to an activate cell, and the secondary cell that the base station apparatus has instructed to be deactivated, and suspends the reception operation in the downlink is referred to a deactivate cell. The first cell is an activate cell. In a case that the carrier aggregation is set up in the hand-over instruction message, the secondary cell immediately subsequent to the hand-over is a deactivate cell.

In order to perform the carrier aggregation, the MAC layer of the mobile station apparatus has a function of controlling the PHY layer to perform activation/deactivation of the cell, and a function of controlling the PHY layer to manage the transmission timing in the uplink.

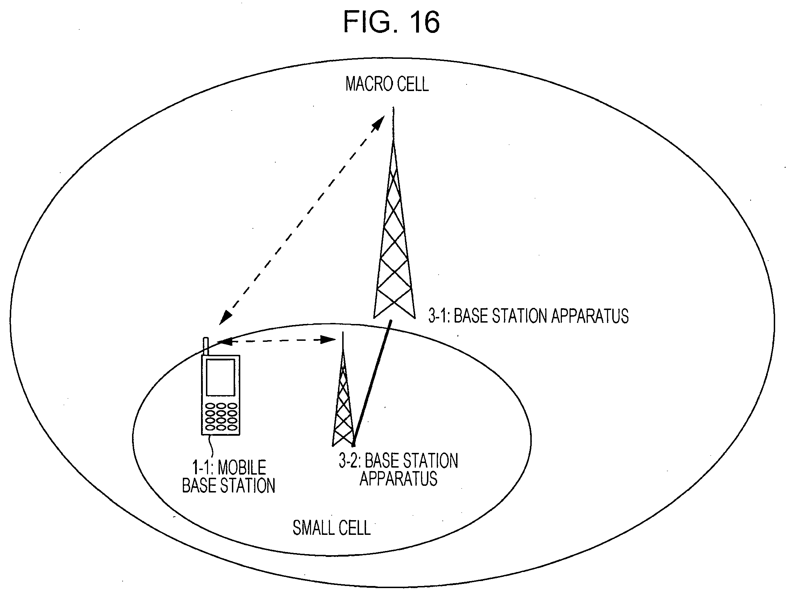

Referring to Fig. 16, the mobile station apparatus that is dual-connected to two base station apparatuses and communicates concurrently with the two base station apparatuses is under study. A base station apparatus of a macro cell and a base station apparatus of a small cell may be connected using a delay-affected low-speed backbone line instead of using a high-speed backbone line (also referred to as backhaul) with almost no delay, such as an optical fiber. In such a case, the term dual connect is based on the assumption that a mobile station apparatus connects the base station apparatus in the macro cell with the base station apparatus in the small cell and that data is transmitted and received via multiple cells between the mobile station apparatus and each of the two base station apparatuses.

In the dual connect, the macro cell is referred to as a primary cell (PCell), and the small cell is referred to as the secondary cell (SCell) to perform the carrier aggregation. Communications are thus performed between the mobile station apparatus and the base station apparatus. The dual connect is based on the assumption that control data is transmitted and received between the base station apparatus in the macro cell and the mobile station apparatus and that user data is transmitted and received between the base station apparatus in the small cell and the mobile station apparatus. It is also contemplated that the base station apparatus configured to transmit or receive the data is changed based on data type (such as QoS or a logic channel) more detailed than the control data and the user data.

In a case that at least one of the reception timing of each downlink component carrier of the mobile station apparatus and the transmission timing of each uplink component carrier to the base station apparatus is different from cell to cell because of the geometry of the base station apparatuses as illustrated in Fig. 16, cells having the same uplink transmission timing is grouped in communications. The grouping of the cells having the same transmission timing is referred to a transmission timing group (Timing Advance Group). The MAC layer of the mobile station apparatus also has a function of controlling the PHY layer to manage the transmission timing group.

### (Embodiments)

### [Description of Configuration]

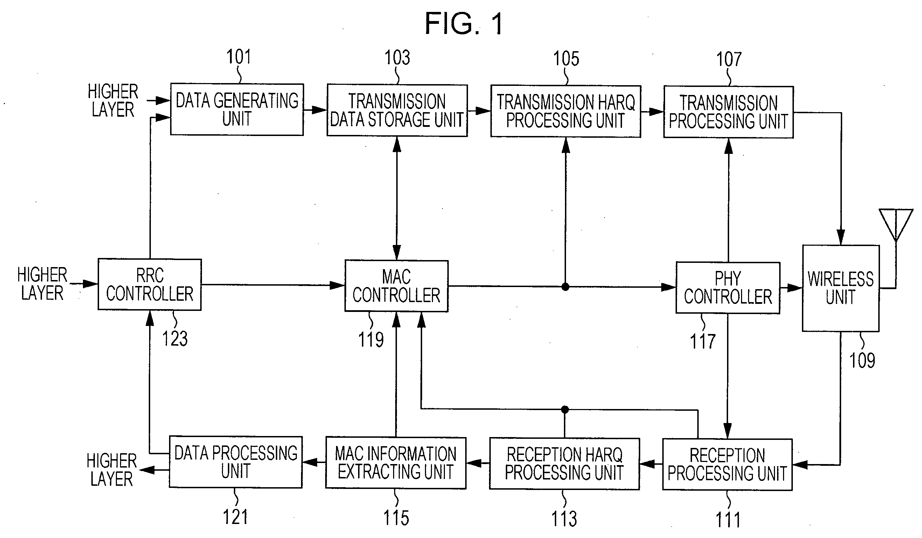

Fig. 1 illustrates a configuration example of the mobile station apparatus of an embodiment of the present invention. Each of the mobile station apparatuses 1-1 through 1-3 includes a data generating unit 101, a transmission data storage unit 103, a transmission HARQ processing unit 105, a transmission processing unit 107, a wireless unit 109, a reception processing unit 111, a reception HARQ processing unit 113, a MAC information extracting unit 115, a PHY controller 117, a MAC controller 119, a data processing unit 121, and an RRC controller 123.

The data generating unit 101 receives the user data from higher layers, and the control data from the RRC controller 123. The data generating unit 101 has functions of the PDCP layer and the RLC layer. The data generating unit 101 performs header compression of the user data into an IP packet, and encrypts data, segments data, and concatenates data, thereby adjusting the data size. The data generating unit 101 outputs the processed data to the transmission data storage unit 103.

The transmission data storage unit 103 stores the data input from the data generating unit 101, and outputs to the transmission HARQ processing unit 105 a specified amount of specified data in response to an instruction from the MAC controller 119. The transmission data storage unit 103 outputs to the MAC controller 119 information related to the amount of stored data.

The transmission HARQ processing unit 105 encodes the input data, and performs a puncture operation on the encoded data. The transmission HARQ processing unit 105 outputs the punctured data to the transmission processing unit 107, and stores the encoded data. In a case that the MAC controller 119 instructs the transmission HARQ processing unit 105 to re-transfer the data, the transmission HARQ processing unit 105 performs on the stored and encoded data a puncture operation different from the previously performed puncture operation, and then outputs the punctured data to the transmission processing unit 107.

The transmission processing unit 107 modulates and encodes the data input from the transmission HARQ processing unit 105. The transmission processing unit 107 performs DFT (Discrete Fourier Transform) - IFFT (Inverse Fast Fourier Transform) on the modulated and encoded data, inserts CP (cyclic prefix) in the processed data, places the data with the CP inserted thereinto on the physical uplink shared channel PUSCH of each component carrier (cell) in the uplink, and then outputs the resulting data to the wireless unit 109.

Upon being instructed to respond to the received data by the PHY controller 117, the transmission processing unit 107 generates an ACK signal or a NACK signal, places the generated signal on the physical uplink control channel PUCCH, and then outputs the generated signal placed on the physical uplink control channel PUCCH to the wireless unit 109. Upon being instructed to transmit a random access preamble by the PHY controller 117, the transmission processing unit 107 generates a random access preamble, places the generated signal on the physical random access channel PRACH, and then outputs the generated signal placed on the physical random access channel PRACH to the wireless unit 109.

The wireless unit 109 up-converts the data input from the transmission processing unit 107 into a radio frequency of transmission position information (transmission cell information) specified by the PHY controller 117, and then transmits the data from a transmit antenna after adjusting transmission power thereof. The wireless unit 109 down-converts a radio signal received from a receive antenna, and then outputs the down-converted signal to the reception processing unit 111.

The reception processing unit 111 performs an FFT (Fast Fourier Transform) operation on, a decoding operation, a demodulation operation, and other operation on the signal input from the wireless unit 109. The reception processing unit 111 outputs data on the physical downlink shared channel PDSCH, out of the demodulated data, to the reception HARQ processing unit 113. The reception processing unit 111 outputs to the MAC controller 119 response information (ACK/NACK) of the uplink transmission data of the control data and uplink transmission grant information (uplink grant) acquired from the physical downlink control channel PDCCH, out of the demodulated data. The uplink transmission grant information includes modulation and encoding method, data size information, HARQ information, and transmission position information of the data.

The reception HARQ processing unit 113 performs a decoding operation on the data input from the reception processing unit 111. Upon successfully completing the decoding operation, the reception HARQ processing unit 113 outputs the resulting data to the MAC information extracting unit 115. Upon completing the decoding operation on the input data unsuccessfully, the reception HARQ processing unit 113 stores the unsuccessfully decoded data. Upon receiving the re-transmitted data, the reception HARQ processing unit 113 combines the stored data and the re-transmitted data, and then performs the decoding operation. The reception HARQ processing unit 113 notifies the MAC controller 119 of whether the input data has been successfully decoded or not.

The MAC information extracting unit 115 extracts the control data of the MAC (Medium Access Control) layer from the data input from the reception HARQ processing unit 113, and outputs the extracted control information to the MAC controller 119. The MAC information extracting unit 115 outputs the remaining data to the data processing unit 121. The data processing unit 121 has the functions of the PDCP layer and the RLC layer, and performs a decomposition function on the compressed IP header, a decryption function of the encrypted data, the segmentation and concatenation operation on data, and other operations, thereby restoring data in an original form. The data processing unit 121 divides the data into the RRC message and the user data, and outputs the RRC message to the RRC controller 123, and the user data to higher layers.

In response to an instruction from the MAC controller 119, the PHY controller 117 controls the transmission processing unit 107, the wireless unit 109, and the reception processing unit 111. Based on the modulation and encoding method, the transmission power information, and the transmission position information (transmission cell information) notified by the MAC controller 119, the PHY controller 117 notifies the transmission processing unit 107 of the modulation and encoding method and the transmission position, and notifies the wireless unit 109 the frequency information of the transmission cell and the transmission power information.

The MAC controller 119 determines a data transmission destination and a data transmission priority order, based on the data transmission control configuration specified by the RRC controller 123, the data amount information acquired from the transmission data storage unit 103, and the uplink transmission grant information acquired from the reception processing unit 111. The MAC controller 119 thus notifies the transmission data storage unit 103 of information related to the data to be transmitted. The MAC controller 119 notifies the transmission HARQ processing unit 105 of HARQ information, and outputs the modulation and encoding method and the transmission position information (transmission cell information) to the PHY controller 117.

The MAC controller 119 acquires from the reception processing unit 111 response information responsive to the uplink transmission data from the reception processing unit 111. If the response information indicates NACK (negative response), the MAC controller 119 instructs the transmission HARQ processing unit 105 and the PHY controller 117 to re-transmit. Upon receiving success or failure information of the decoding operation of the data from the reception HARQ processing unit 113, the MAC controller 119 instructs the PHY controller 117 to transmit ACK or NACK signal.

The MAC controller 119 has the function of the MAC layer. In a case that activation/deactivation instruction information of the cell (or the component carrier) and discontinuous reception (DRX) control information are received out of MAC control information input from the MAC information extracting unit 115, the MAC controller 119 controls the wireless unit 109 to perform activation/deactivation control and DRX control, and controls the PHY controller 117 to control the transmission processing unit 107 and the reception processing unit 111.

The MAC controller 119 outputs to the PHY controller 117 the transmission timing information out of the MAC control information input from the MAC information extracting unit 115. The MAC controller 119 manages the uplink transmission timing to control the PHY controller 117.

The MAC controller 119 manages the validity of the transmission timing in the uplink using a transmission timing timer. The MAC controller 119 includes a transmission timing timer for each cell or for each transmission timing group. In a case that the transmission timing information is applied on a per cell basis or on a per transmission timing group, the MAC controller 119 starts or re-starts the transmission timing timer.

The MAC controller 119 creates a buffer status report (BSR) as the data amount information of data stored on the transmission data storage unit 103, and outputs the buffer status report to the transmission data storage unit 103. The MAC controller 119 creates a power headroom report (PHR) as the transmission power information of each cell, and then outputs the power headroom report to the transmission data storage unit 103.

The MAC controller 119 manages a variety of timers to perform each control operation. The timers include a timer configured to control the DRX control, a transmission timing timer configured to manage the validity of the transmission timing, a timer related to the notification control of BSR, and a timer related to the notification control of PHR.

The RRC controller 123 performs a variety of configurations for communication with the base station apparatus 3-1 and the base station apparatus 3-2, including a connection and disconnection operation with the base station apparatus 3-1, the configuration of the carrier aggregation, and the data transmission control configurations of the control data and the user data. The RRC controller 123 exchanges, with higher layers, information related to the variety of configurations, and controls lower layers in connection with the variety of configurations.

The RRC controller 123 creates an RRC messages, and outputs the created RRC message to the data generating unit 101. The RRC controller 123 analyzes an RRC message input from the data processing unit 121. The RRC controller 123 creates a message indicating transmission performance of the host mobile station apparatus, and outputs the message to the data generating unit 101. The RRC controller 123 outputs information needed for the MAC layer to the MAC controller 119, and information needed for the physical layers to the PHY controller 117.

The transmission processing unit 107, the wireless unit 109, the reception processing unit 111, and the PHY controller 117 perform the operations of the physical layers. The transmission data storage unit 103, the transmission HARQ processing unit 105, the reception HARQ processing unit 113, the MAC information extracting unit 115, and the MAC controller 119 perform the operations of the MAC layer. The data generating unit 101 and the data processing unit 121 perform the operations of the RLC layer and the PDCP layer. The RRC controller 123 performs the operations of the RRC layer.

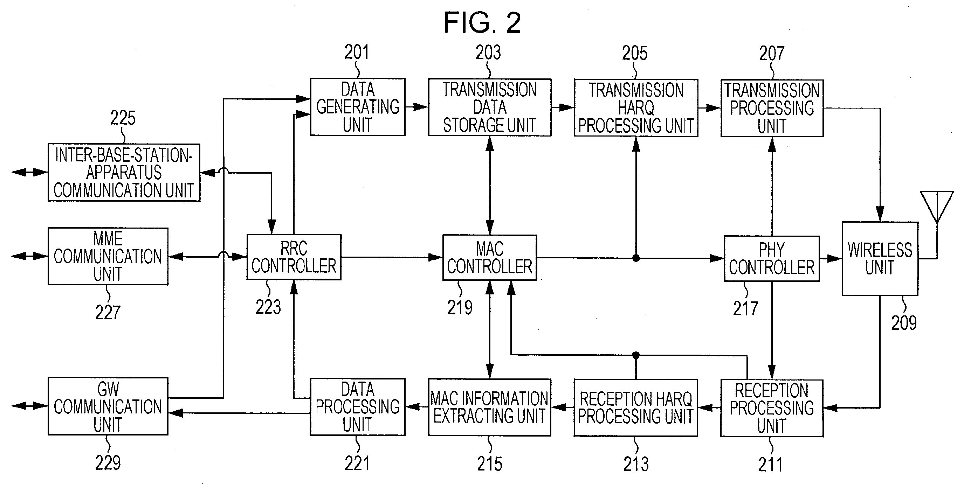

Fig. 2 illustrates a configuration example of the base station apparatus of the embodiment of the present invention. The base station apparatus 3-1 or the base station apparatus 3-2 includes a data generating unit 201, a transmission data storage unit 203, a transmission HARQ processing unit 205, a transmission processing unit 207, a wireless unit 209, a reception processing unit 211, a reception HARQ processing unit 213, a MAC information extracting unit 215, a PHY controller 217, a MAC controller 219, a data processing unit 221, an RRC controller 223, an inter-base-station apparatus communication unit 225, an MME communication unit 227, and a GW communication unit 229.

The data generating unit 201 receives the user data from the GW communication unit 229, and the control data from the RRC controller 223. The data generating unit 201 has functions of the PDCP layer and the RLC layer. The data generating unit 201 performs header compression of the user data into an IP packet, and encrypts data, segments data, and concatenates data, thereby adjusting the data size. The data generating unit 201 outputs the processed data and logical channel information to the transmission data storage unit 203.

The transmission data storage unit 203 stores the data input on a per each user basis from the data generating unit 201, and outputs to the transmission HARQ processing unit 205 a specified amount of specified data in response to an instruction from the MAC controller 219. The transmission data storage unit 203 outputs information related to the amount of stored data to the MAC controller 219.

The transmission HARQ processing unit 205 encodes the input data, and performs a puncture operation on the encoded data. The transmission HARQ processing unit 205 outputs the punctured data to the transmission processing unit 207, and stores the encoded data. In a case that the MAC controller 219 instructs the transmission HARQ processing unit 205 to re-transfer the data, the transmission HARQ processing unit 205 performs on the stored and encoded data a puncture operation different from the previously performed puncture operation, and then outputs the punctured data to the transmission processing unit 207.

The transmission processing unit 207 modulates and encodes the data input from the transmission HARQ processing unit 205. The transmission processing unit 207 maps the modulated and coded data to signals of the physical downlink control channel PDCCH, the downlink synchronization signal, the physical broadcast channel PBCH, and the physical downlink shared channel PDSCH of each cell, and maps the modulated and coded data to these channels. The transmission processing unit 207 performs, on the mapped data, OFDM signal processing including serial/parallel conversion, IFFT (Inverse Fast Fourier Transform), and CP insertion. The transmission processing unit 207 thus generates an OFDM signal.

The transmission processing unit 207 outputs the generated OFDM signal to the wireless unit 209. Upon being instructed to respond to the received data by the MAC controller 219, the transmission processing unit 207 generates an ACK signal or a NACK signal, places the generated signal on the physical downlink control channel PDCCH, and then outputs the generated signal placed on the physical downlink control channel PDCCH to the wireless unit 209.

The wireless unit 209 up-converts the data input from the transmission processing unit 207 into a radio frequency, and then transmits the data from a transmit antenna after adjusting transmission power thereof. The wireless unit 209 down-converts the radio signal received from a receive antenna, and then outputs the down-converted signal to the reception processing unit 211. The reception processing unit 211 performs an FFT (Fast Fourier Transform) operation, a decoding operation, a demodulation operation, and other operations on the signal input from the wireless unit 209.

The reception processing unit 211 outputs data on the physical uplink shared channel PUSCH, out of the demodulated data, to the reception HARQ processing unit 213. The reception processing unit 211 outputs to the MAC controller 219 response information (ACK/NACK) of the downlink transmission data of the control data acquired from the physical uplink control channel PUCCH, downlink radio quality information (CQI), and uplink transmission request information (scheduling request) out of the demodulated data.

The reception HARQ processing unit 213 performs a decoding processing on the data input from the reception processing unit 211. Upon successfully completing the decoding operation, the reception HARQ processing unit 213 outputs the resulting data to the MAC information extracting unit 215. Upon completing the decoding operation on the input data unsuccessfully, the reception HARQ processing unit 213 stores the unsuccessfully decoded data. Upon receiving the re-transmitted data, the reception HARQ processing unit 213 combines the stored data and the re-transmitted data, and then performs the decoding operation. The reception HARQ processing unit 213 notifies the MAC controller 219 of whether the input data has been successfully decoded or not.

The MAC information extracting unit 215 extracts the control data of the MAC layer from the data input from the reception HARQ processing unit 213, and outputs the extracted control information to the MAC controller 219. The MAC information extracting unit 215 outputs the remaining data to the table data processing unit 221. The table data processing unit 221 has the functions of the PDCP layer and the RLC layer, and performs a decomposition function on the compressed IP header, a decryption function of the encrypted data, the segmentation and concatenation operation on data, and other operations, thereby restoring data in an original form. The table data processing unit 221 divides the data into the RRC message and the user data, and outputs the RRC message to the RRC controller 223, and the user data to higher layers.

The MAC controller 219 has the function of the MAC layer, and controls the MAC layer based information acquired from the RRC processing unit 223 or a lower layer. The MAC controller 219 performs a scheduling operation in the downlink and the uplink. The MAC controller 219 performs the downlink and uplink scheduling operation based on the response information (ACK/NACK) of the downlink transmission data input from the reception processing unit 211, the downlink radio quality information (CQI) and uplink transmission request information (scheduling request), the control information input from the MAC information extracting unit 215, and the data amount information of each user acquired from the transmission data storage unit 203. The MAC controller 219 outputs the scheduling results to the transmission processing unit 207.

The MAC controller 219 acquires from the reception processing unit 211 response information responsive to the uplink transmission data from the reception processing unit 211. If the response information indicates NACK (negative response), the MAC controller 219 instructs the transmission HARQ processing unit 205 and the transmission processing unit 207 to re-transmit. Upon receiving success or failure information of the decoding operation of the data from the reception HARQ processing unit 213, the MAC controller 219 instructs the transmission processing unit 207 to transmit an ACK or NACK signal.

The MAC controller 219 performs an activation/deactivation operation of a cell (or a component carrier) allocated to the mobile station apparatus 1-1, and manages the uplink transmission timing.

The RRC processing unit 223 performs a variety of configurations for communication with the mobile station apparatus 1-1, including a connection/disconnection operation with the mobile station apparatus 1-1, the configuration of the carrier aggregation, and the data transmission control configuration as to which cell is to be used to transmit and receive the control data and user data of the mobile station apparatus 1-1. The RRC processing unit 223 thus exchanges information related to the variety of configurations with the higher layers, and controls the lower layers in connection with the variety of configurations.

The RRC controller 223 creates a variety of RRC messages, and outputs the created RRC messages to the data generating unit 201. The RRC controller 223 analyzes an RRC message input from the table data processing unit 221. Upon receiving a message indicating transmission and reception performance of the mobile station apparatus from the mobile station apparatus 1-1, the RRC controller 223 sets the carrier aggregation appropriate for the mobile station apparatus 1-1 based on the transmission and reception performance information of the mobile station apparatus. The RRC controller 223 outputs information needed for the MAC layer to the MAC controller 219, and information needed for the physical layers to the PHY controller 217. In order to perform the hand-over or dual connect, the RRC controller 223 notifies the inter-base-station apparatus communication unit 225 and the MME communication unit 227 of necessary information.

The inter-base-station apparatus communication unit 225 is connected to another base station apparatus, and transmits to the other base station apparatus the inter-base-station apparatus control message input from the RRC controller 223. The inter-base-station apparatus communication unit 225 receives an inter-base-station apparatus control message from the other base station apparatus, and outputs the received control message to the RRC controller 223. The inter-base-station apparatus control message includes a hand-over request message, a dual connect request message, a hand-over request response message, a dual connect request response message, a status transfer message, a mobile station information release message, and other messages.

The MME communication unit 227 is connected to the MME, and transmits to the MME a base station apparatus - MME control message input from the RRC controller 223. The MME communication unit 227 receives from the MME a base station apparatus - MME control message, and outputs the received control message to the RRC controller 223. The base station apparatus - MME control message includes a path switch request message, and a path switch request response message.

The GW communication unit 229 is connected to the GW, receives from the GW the user data of the mobile station apparatus transmitted from the GW, and outputs the received data to the data generating unit 201. The GW communication unit 229 also transmits to the GW the user data of the mobile station apparatus input from the data processing unit 221.

The transmission processing unit 207, the wireless unit 209, and the reception processing unit 211 perform the operations of the PHY layer. The transmission data storage unit 203, the transmission HARQ processing unit 205, the reception HARQ processing unit 213, the MAC information extracting unit 215, and the MAC controller 219 perform the operations of the MAC layer. The data generating unit 201 and the data processing unit 221 perform the operations of the RLC layer and the PDCP layer. The RRC controller 223 performs the RRC layer.

### [Description of Operation]

The wireless communication system described with reference to Fig. 8 through Fig. 16 is assumed in the following discussion. Referring to Fig. 8, the base station apparatus 3-1 communicates with multiple mobile station apparatuses 1-1, 1-2, and 1-3. Also assumed in the following discussion is the wireless communication system described with reference to Fig. 16 in which the base station apparatus 3-1 in the macro cell and the base station apparatus 3-2 in the small cell communicate with the mobile station apparatus 1-1 via multiple cells.

The mobile station apparatus 1-1 of Fig. 16 is connected to the base station apparatus 3-1 and the base station apparatus 3-2 in the dual connect. Control information of at least the mobile station apparatus 1-1 (control-plane information) is transmitted and received between the base station apparatus 3-1 of the macro cell and the MME The user information of at least the mobile station apparatus 1-1 (user-plane information) is transmitted and received between the base station apparatus 3-2 of the small cell and the GW. Control information to control the mobile station apparatus 1-1 is transmitted and received between the base station apparatus 3-1 of the macro cell and the base station apparatus 3-2 of the small cell.

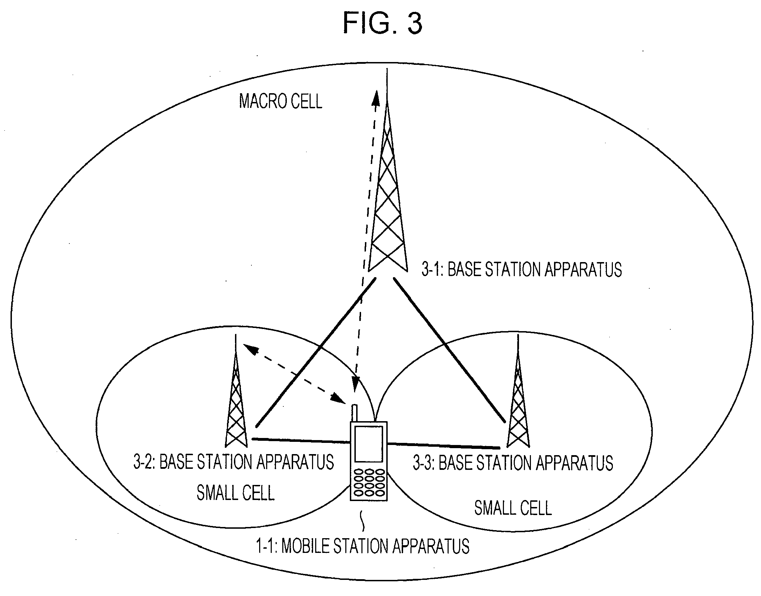

While the base station apparatus 3-1 (first base station apparatus) of the macro cell and the base station apparatus 3-2 (second base station apparatus) of the small cell within the area of the macro cell communicate with (are connected with) the mobile station apparatus 1-1 in the dual connect as illustrated in Fig. 3, the mobile station apparatus 1-1 then detects a small cell of a base station apparatus 3-3 within the area of the macro cell. The mobile station apparatus 1-1 cell-switches from the small cell of the base station apparatus 3-2 to the small cell of the base station apparatus 3-3 (third base station apparatus), thereby changing base station apparatuses in the dual connect. The dual connect change procedure in such a case is described below.

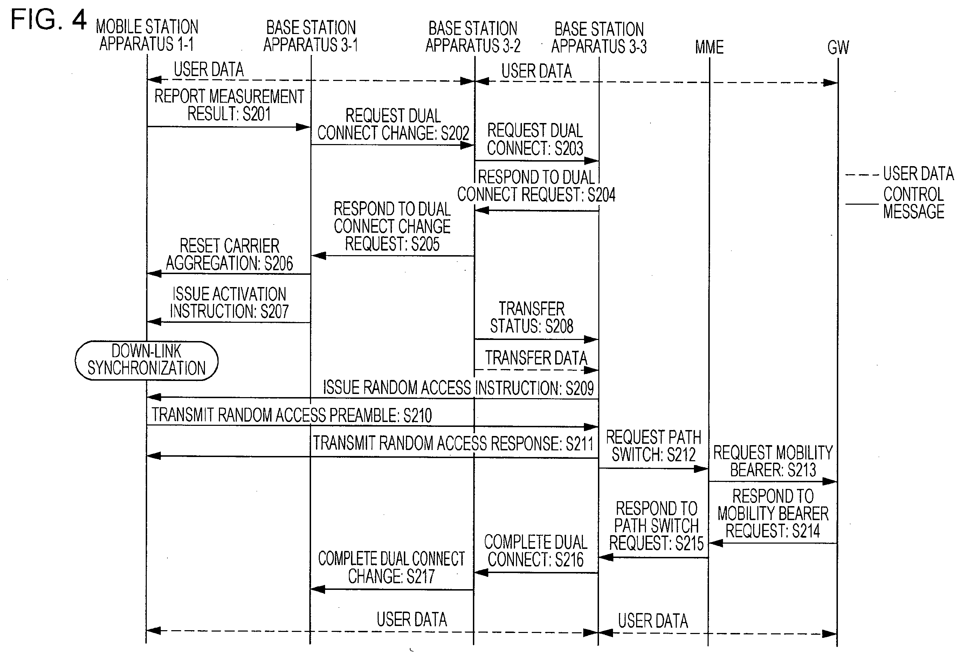

Fig. 4 illustrates an example of the dual connect change procedure of the embodiment of the present invention. In the discussion that follows, the base station apparatus of the macro cell is the base station apparatus 3-1, the base station apparatus of the small cell is the base station apparatus 3-2, and the base station apparatus of the small cell is the base station apparatus 3-3. The base station apparatus 3-1 of the macro cell is a primary cell (PCell), and the base station apparatus 3-2 and the base station apparatus 3-3 of the small cell are secondary cells (SCell).

The mobile station apparatus 1-1 performs the radio quality measurement of a neighbor cell (a neighbor frequency), and notifies the base station apparatus 3-1 of the macro cell of a measurement report message including the radio quality measurement results (step S201). Based on the measurement results of the mobile station apparatus 1-1, the base station apparatus 3-1 determines whether to cause the mobile station apparatus 1-1 to change the dual connect from the base station apparatus 3-2 of the small cell to the base station apparatus 3-3 of the small cell. In order for the mobile station apparatus 1-1 to change the dual connect, the base station apparatus 3-1 notifies the base station apparatus 3-2 of the small cell of a dual connect change request message (step S202).

The dual connect change request message includes information that is needed to change the dual connect from the base station apparatus 3-2 of the small cell to the base station apparatus 3-3 of the small cell. The information needed to change the dual connect includes at least identification information of the base station apparatus 3-3 as a dual connect change destination. In connection with the information needed to change the dual connect, the base station apparatus 3-1 does not necessarily have to transmit, to the base station apparatus 3-2, information concerning the mobile station apparatus 1-1 and stored by the base station apparatus 3-2.

The information needed to change the dual connect may include information that is needed for the base station apparatus 3-3 to notify the MME the path switch request message, information concerning the mobile station apparatus 1-1, encryption key information, and information that the base station apparatus 3-2 needs to perform transmission and reception control of the user data of the mobile station apparatus 1-1. The dual connect change request message may include information as to whether to notify the base station apparatus 3-3 of the information of the mobile station apparatus 1-1.

Upon receiving the dual connect change request message, the base station apparatus 3-2 notifies the dual connect change request message to the base station apparatus 3-3 of the small cell (step S203). The dual connect change request message includes the information that the base station apparatus 3-3 needs for the dual connect. The information needed for the dual connect may include information that is needed for the base station apparatus 3-3 to notify the MME of the path switch request message, information concerning the mobile station apparatus 1-1, encryption key information, and information that the base station apparatus 3-3 needs to perform transmission and reception control of the user data of the mobile station apparatus 1-1.

If the dual connect change request message includes the information as to whether to notify the base station apparatus 3-3 of the information concerning the mobile station apparatus 1-1, the base station apparatus 3-2 determines whether to include the information concerning the mobile station apparatus 1-1 in a dual connect request message, depending on the information as to whether to notify the base station apparatus 3-3 of the information concerning the mobile station apparatus 1-1.

If the base station apparatus 3-1 and the base station apparatus 3-2 use the same encryption key, the base station apparatus 3-2 may include the encryption key information in the dual connect request message. If the base station apparatus 3-1 and the base station apparatus 3-2 use different encryption keys, the base station apparatus 3-2 may not include the encryption key information in the dual connect request message.

The base station apparatus 3-1 may include, in the dual connect change request message, information as to whether to notify the base station apparatus 3-3 of the encryption key information. The base station apparatus 3-2 may determine whether to include the encryption key information in the dual connect request message, depending on whether the dual connect change request message includes the information as to whether to notify the base station apparatus 3-3 of the encryption key information.

Upon granting the dual connect, the base station apparatus 3-3 notifies the base station apparatus 3-2 of the small cell of a dual connect request response message (step S204). The dual connect request response message includes a radio parameter of the small cell of the base station apparatus 3-3, and information the base station apparatus 3-3 allocates to the mobile station apparatus 1-1. The information the base station apparatus 3-3 allocates to the mobile station apparatus 1-1 includes information of physical channels, such as radio resource information of the physical uplink control channel PUCCH or radio resource information of the uplink reference signal, and configuration information of from the MAC layer to the RRC layer. The information the base station apparatus 3-3 allocates to the mobile station apparatus 1-1 may include the encryption key information.

Upon receiving the dual connect request response message, the base station apparatus 3-2 of the small cell notifies the base station apparatus 3-1 of the macro cell of a dual connect change request response message (step S205). The dual connect change request response message includes information included in the dual connect request response message.

Note that the dual connect request message or the dual connect change request message may replaced with the hand-over request message. In such a case, the hand-over request message may newly include information indicating the dual connect. Similarly, the dual connect request response message or the dual connect change request response message may be replaced with the hand-over request response message. In such a case, the hand-over request response message may newly include information indicating the dual connect.

Upon receiving the dual connect change request response message, the base station apparatus 3-1 notifies the mobile station apparatus 1-1 of a carrier aggregation configuration message indicating the reconfiguration of the carrier aggregation (step S206). The carrier aggregation configuration message may include a radio parameter of the small cell of the base station apparatus 3-3 included in the dual connect change request response message, information the base station apparatus 3-3 allocates to the mobile station apparatus 1-1, and data transmission control information that instructs the user data of the mobile station apparatus 1-1 to be transmitted to the cell of the base station apparatus 3-3.

Upon receiving the carrier aggregation configuration message, the mobile station apparatus 1-1 releases the cell of the base station apparatus 3-2. More specifically, the mobile station apparatus 1-1 releases the parameters of from the PHY layer to the RRC layer related to the cell of the base station apparatus 3-2. The mobile station apparatus 1-1 adds the cell of the base station apparatus 3-3 included in the carrier aggregation configuration message. In other words, the mobile station apparatus 1-1 sets the parameters of from the PHY layer to the RRC layer related to the cell of the base station apparatus 3-3.

After notifying the carrier aggregation configuration message, the base station apparatus 3-1 transmits to the mobile station apparatus 1-1 an activation instruction message of the small cell of the base station apparatus 3-3 (step S207). After transmitting the dual connect change request response message, the base station apparatus 3-2 notifies to the base station apparatus 3-3 a status transfer message including data information of the user data of the mobile station apparatus 1-1 stored on the base station apparatus 3-2 (step S208). The base station apparatus 3-2 thereby transfers the user data of the mobile station apparatus 1-1 stored on the base station apparatus 3-2 to the base station apparatus 3-3.

Upon receiving the activation instruction message, the mobile station apparatus 1-1 performs a downlink synchronization operation with the cell of the base station apparatus 3-3. Note that the mobile station apparatus 1-1 may also perform the downlink synchronization operation subsequent to receiving the carrier aggregation configuration message. In succession to the downlink synchronization operation, the mobile station apparatus 1-1 starts monitoring the physical downlink control channel PDCCH from the small cell of the base station apparatus 3-3.

Upon receiving the status transfer message, the base station apparatus 3-3 transmits a random access instruction message to the mobile station apparatus 1-1 via the physical downlink control channel PDCCH (step S209). Upon receiving the random access instruction message, the mobile station apparatus 1-1 transmits to the base station apparatus 3-3 a random access preamble specified by the random access instruction message (step S210).

After receiving the random access preamble transmitted from the mobile station apparatus 1-1, the base station apparatus 3-3 transmits to the mobile station apparatus 1-1 a random access response message including the transmission timing information (step S211). Note that the base station apparatus 3-3 may transmit to the mobile station apparatus 1-1 the user data of the mobile station apparatus 1-1 transferred from the base station apparatus 3-2 after the transmission of the random access response message.

After transmitting the random access response message, the base station apparatus 3-3 notifies the MME (Mobility Management Entity) of a path switch request message that requests the MME to change the data path of the user data of the mobile station apparatus 1-1 from the base station apparatus 3-2 to the base station apparatus 3-3 (step S212).

Upon receiving the path switch request message, the MME notifies the GW (gateway) of a mobility bearer request message (step S213). Upon receiving the mobility bearer request message, the GW changes the data path of the user data of the mobile station apparatus 1-1 from the base station apparatus 3-3 to the base station apparatus 3-3. The GW notifies the MME of a mobility bearer request response message (step S214). The MME notifies the base station apparatus 3-3 of a path switch request response message (step S215).

Note that the base station apparatus 3-3 may include, in the path switch request message, information indicating the dual connect state with the base station apparatus 3-2. In this way, the base station apparatus 3-3 notifies the MME that the path switch request message is a change request of the data path to another data path that is not in the hand-over state. Alternatively, a new path switch request message and a new path switch request response message may be arranged for the dual connect purposes.

Upon receiving the path switch request response message, the base station apparatus 3-3 transmits a dual connect completion message to the base station apparatus 3-2. Upon receiving the dual connect completion message, the base station apparatus 3-2 releases the mobile station apparatus information of the mobile station apparatus 1-1. The base station apparatus 3-2 transmits a dual connect change completion message to the base station apparatus 3-1. Note that the dual connect completion message may be replaced with the mobile station information release message.

In a case that the random access preamble has not been detected or received from the mobile station apparatus 1-1 within the time elapse of a predetermined period of time since the base station apparatus 3-3 transmitted the random access instruction message to the mobile station apparatus 1-1, the base station apparatus 3-3 notifies the base station apparatus 3-2 that a fault has been detected in the mobile station apparatus 1-1. More specifically, the base station apparatus 3-3 notifies the base station apparatus 3-2 that the base station apparatus 3-3 has not received the random access preamble from the mobile station apparatus 1-1.

Alternatively, if the base station apparatus 3-3 fails to detect or receive the random access preamble from the mobile station apparatus 1-1, the base station apparatus 3-3 may notify the base station apparatus 3-1 that the base station apparatus 3-3 has detected a fault in the mobile station apparatus 1-1.

The base station apparatus 3-3 suspends the procedure to change the data path of the user data of the mobile station apparatus 1-1. More specifically, the base station apparatus 3-3 does not transmit to the MME the path switch request message to change the data path of the user data of the mobile station apparatus 1-1.

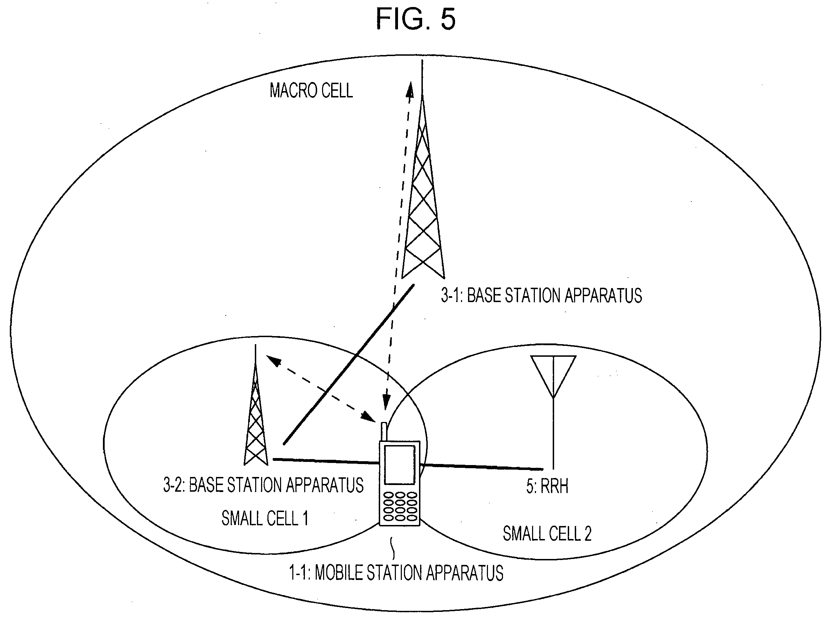

As illustrated in Fig. 5, a small cell 2 may include an RRH (radio remote head) of a radio antenna and a radio unit alone, and RRH 5 may be connected to the base station apparatus 3-2 to form a cell. In a case that the base station apparatus 3-1 recognizes the above configuration, the base station apparatus 3-1 does not necessarily have to transmit to the base station apparatus 3-2 information concerning the mobile station apparatus 1-1 (mobile station information and UE context) and stored on the base station apparatus 3-2. In such a case, the dual connect change procedure is free from steps S203, S204, S212, S213, S214, S215, and S216.

Such a configuration cuts down on an amount of data included in a message to a base station apparatus serving as a dual connect source and a base station apparatus serving as a dual connect destination.

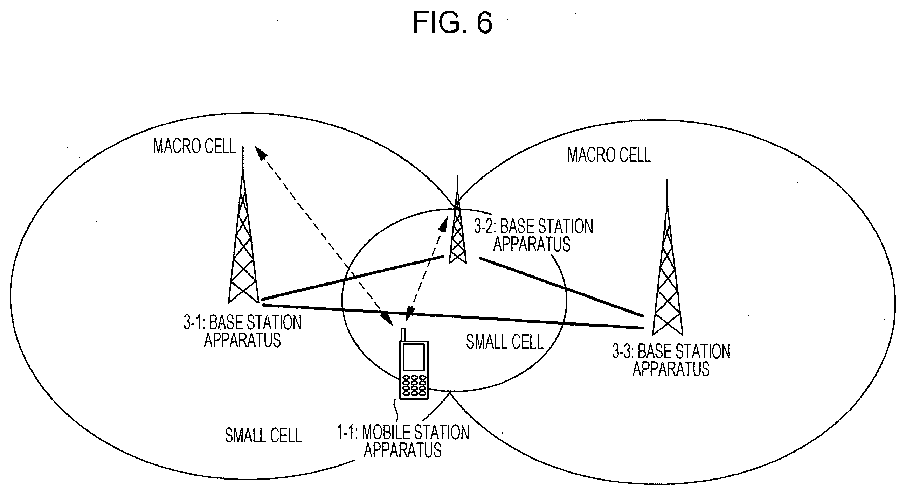

The base station apparatus 3-1 of the macro cell and the base station apparatus 3-2 of the small cell may now remain in communication with (remain connected with) the mobile station apparatus 1-1 in the dual connect as illustrated in Fig. 6. The mobile station apparatus 1-1 may detect the macro cell of the base station apparatus 3-3 and the mobile station apparatus 1-1 may change from the macro cell of the base station apparatus 3-1 to the macro cell of the base station apparatus 3-3. The hand-over procedure in such a case is described below.

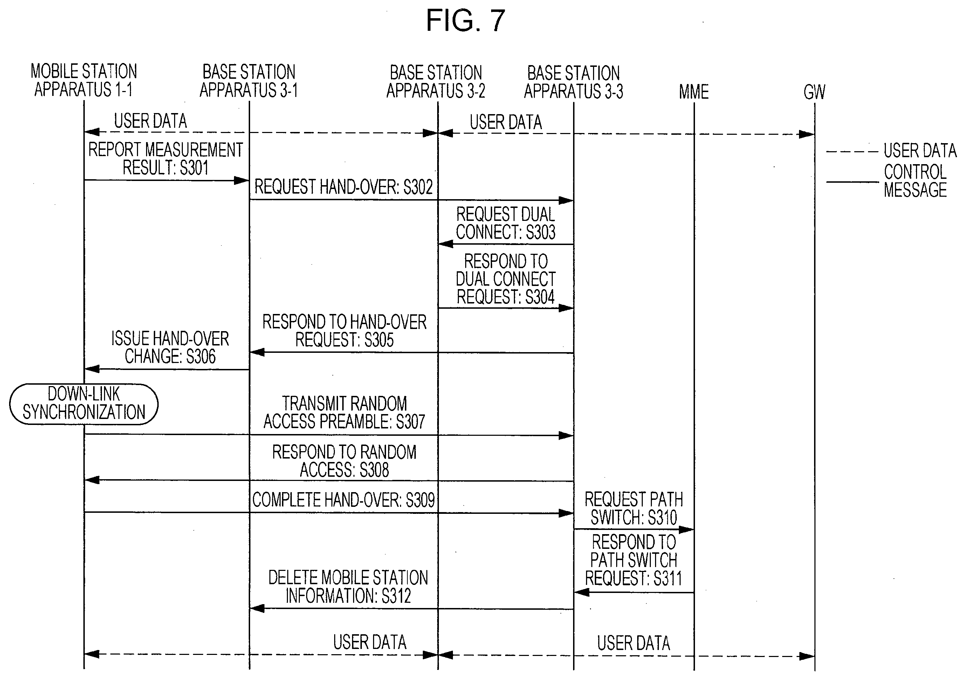

Fig. 7 illustrates an example of the hand-over procedure of the embodiment of the present invention. Note in the following discussion that the base station apparatuses are the base station apparatus 3-1 and the base station apparatus 3-3 of the macro cell, and that the base station apparatus of the small cell is the base station apparatus 3-2. The base station apparatus 3-1 and the base station apparatus 3-3 of the macro cell are primary cells (PCells) and the base station apparatus 3-2 of the small cell is a secondary cell (SCell).

The mobile station apparatus 1-1 performs the radio quality measurement of a neighbor cell (a neighbor frequency), and notifies the base station apparatus 3-1 of the macro cell of a measurement report message including the radio quality measurement results (step S301). Based on the measurement results of the mobile station apparatus 1-1, the base station apparatus 3-1 determines whether to hand over to the base station apparatus 3-3. Upon determining that the base station apparatus 3-1 hands over to the base station apparatus 3-3, the base station apparatus 3-1 notifies the base station apparatus 3-3 of a hand-over request message (step S302).

The hand-over request message includes information the base station apparatus 3-3 needs in the hand-over operation. The information needed in the hand-over operation includes information concerning the mobile station apparatus 1-1 at the RRC layer level in the base station apparatus 3-1, information of the mobile station apparatus 1-1 at a layer level equal to or higher than the RRC layer, encryption key information, and a MAC address of the mobile station apparatus 1-1. The hand-over request message may also include information indicating the dual connect state with the base station apparatus 3-2 of the small cell. The hand-over request message may further include information concerning data that is transmitted and received between the base station apparatus 3-2 and the mobile station apparatus 1-1.

Upon receiving the hand-over request message, the base station apparatus 3-3 notifies the dual connect request message to the base station apparatus 3-2 of the small cell (step S303).

The dual connect request message transmitted herein includes information that indicates that the base station apparatus in the dual connect has been changed from the base station apparatus 3-1 to the base station apparatus 3-3. The dual connect request message may also include information that indicates that the base station apparatus 3-2 is free from requesting the MME to perform the path switch. The dual connect request message may include the encryption key information in a case that the base station apparatus 3-2 uses the same encryption key as that of the base station apparatus 3-3.

The base station apparatus 3-2 notifies the base station apparatus 3-3 of the dual connect request response message (step S304). The dual connect request response message includes a radio parameter of the small cell of the base station apparatus 3-2, and information the base station apparatus 3-2 allocates to the mobile station apparatus 1-1. The information the base station apparatus 3-2 allocates to the mobile station apparatus 1-1 includes radio resource information of the physical uplink control channel PUCCH and radio resource information of the uplink reference signal.

The dual connect request message may be replaced with the hand-over request message. In such a case, the hand-over request message may newly include information indicating the dual connect. Similarly, the dual connect request response message may be replaced with the hand-over request response message. In such a case, the hand-over request response message may newly include information indicating the dual connect.

Upon receiving the dual connect request response message, the base station apparatus 3-3 notifies the base station apparatus 3-1 of the macro cell of the hand-over request response message (step S305). The hand-over request response message includes a radio parameter of the cell of the base station apparatus 3-3, and information the base station apparatus 3-3 allocates to the mobile station apparatus 1-1. The information allocated to the mobile station apparatus 1-1 includes radio resource information of the uplink, preamble information to execute the random access procedure during the hand-over, new C-RNTI to the mobile station apparatus 1-1, information concerning the encryption key, and configuration information of from the MAC layer to the RRC layer.

Upon receiving the hand-over request response message, the base station apparatus 3-1 notifies the mobile station apparatus 1-1 of a hand-over instruction message (step S306). The hand-over instruction message may include a radio parameter of the cell of the base station apparatus 3-3 included in the hand-over request response message, and information the base station apparatus 3-3 allocates to the mobile station apparatus 1-1.

Upon receiving the hand-over instruction message, the mobile station apparatus 1-1 performs the downlink synchronization to the cell of the base station apparatus 3-3. In succession to the completion of the downlink synchronization, the mobile station apparatus 1-1 starts the random access procedure to establish the uplink synchronization with the base station apparatus 3-3, and transmits the random access preamble to the base station apparatus 3-3 (step S307). The mobile station apparatus 1-1 receives the random access response message from the base station apparatus 3-3, and sets an uplink transmission timing for synchronization with the uplink (step S308). The mobile station apparatus 1-1 notifies the base station apparatus 3-3 of the hand-over completion message (step S309).

The process of the mobile station apparatus 1-1 at the reception of the hand-over instruction message includes, in addition to the downlink synchronization operation to the cell of the base station apparatus 3-3, a reset operation of the parameter of the MAC layer having operated in relation to the cell of the base station apparatus 3-1, and the configuration operation of the parameters of the MAC layer, the RLC layer, the PDCP layer, and the RRC layer of the base station apparatus 3-3. The reset operation of the parameter of the MAC layer refers to the stopping of a variety of timers managed at the MAC layer, an initialization operation related to a transmission and reception buffer, and cancelling of a variety of event triggers.

At the reception of the hand-over instruction message, the mobile station apparatus 1-1 does not perform the reset operation of the parameter of the MAC layer related to the cell of the base station apparatus 3-2. The communication continues between the mobile station apparatus 1-1 and the base station apparatus 3-2. The mobile station apparatus 1-1 sets the encryption key information if the base station apparatus 3-3 and the base station apparatus 3-2 use different encryption keys.

If the mobile station apparatus 1-1 recognizes the dual connect with the base station apparatus 3-1 and the base station apparatus 3-2, the mobile station apparatus 1-1 may perform the reset operation of the parameter of the MAC layer having operated in relation to the cell of the base station apparatus 3-1 but may not perform the reset operation of the parameter of the MAC layer in relation to the cell of the base station apparatus 3-2. The base station apparatus 3-1 may notify the dual connect state in advance using a message, such as a carrier aggregation configuration message. Alternatively, the base station apparatus 3-1 may indicate information that the dual connect state is indicated in the hand-over instruction message or information that only the reconfiguration operation of the MAC layer having operated in relation to the cell of the base station apparatus 3-1 is to be performed.

If the mobile station apparatus 1-1 fails to recognize the dual connect state, the mobile station apparatus 1-1 performs the reset operation of the parameters of the MAC layer having operated in relation to the cell of the base station apparatus 3-1 and the base station apparatus 3-2, and performs the configuration operation of the parameters of the PHY layer, the MAC layer, the RLC layer, the PDCP layer, and the RRC layer of the base station apparatus 3-3 and the base station apparatus 3-2 included in the hand-over instruction message.

Upon receiving the hand-over instruction message, the mobile station apparatus 1-1 performs control to release the cell of the base station apparatus 3-1 and to add the cell of the base station apparatus 3-3. More specifically, the mobile station apparatus 1-1 releases the parameters of from the PHY layer to the RRC layer related to the cell of the base station apparatus 3-1, and sets the parameters of from the PHY layer to the RRC layer related to the cell of the base station apparatus 3-3.

In such a case, the base station apparatus 3-1 may transmit to the mobile station apparatus 1-1 the carrier aggregation configuration message rather than the hand-over instruction message. Alternatively, the base station apparatus 3-2 may transmit the hand-over instruction message or the carrier aggregation configuration message.

Upon receiving the hand-over completion message, the base station apparatus 3-3 notifies the MME of the path switch request message (step S310). Note that the path switch request message may simply indicate to the MME that the base station apparatus connected to the mobile station apparatus 1-1 is changed from the base station apparatus 3-1 to the base station apparatus 3-3.

Upon receiving the path switch request message, the MME notifies the base station apparatus 3-3 of the path switch request response message (step S311). The MME recognizes through the path switch request message that the base station apparatus connected to the mobile station apparatus 1-1 has been changed from the base station apparatus 3-1 to the base station apparatus 3-3. Alternatively, instead of the path switch request message, a new message may be created to indicate that the base station apparatus connected to the mobile station apparatus 1-1 has been changed.

Upon receiving the path switch request response message, the base station apparatus 3-3 notifies the base station apparatus 3-1 of the mobile station information release message (step S312). Upon receiving the mobile station information release message, the base station apparatus 3-1 releases the information from the mobile station apparatus 1-1 (step S312).

In this way, the base station apparatus connected to the mobile station apparatus may be changed from the base station apparatus 3-1 to the base station apparatus 3-3 while the communication is maintained between the base station apparatus 3-2 and the mobile station apparatus 1-1.

The embodiment of the present invention has been described in detail with reference to the drawings. The specific configurations are not limited to those described above. A variety of design changes may be possible without departing from the scope of the present invention.

In the embodiment, the mobile station apparatus is described as an example of a terminal apparatus or a communication apparatus. The present invention is not limited to these types. The present invention may be applied to apparatuses installed indoors or outdoors, or non-portable electronics, such as terminal apparatuses including AV apparatuses, kitchen equipment, cleaners and washing machines, air-conditioners, office equipment, vending machines, and other life support devices, or communication apparatuses.

For convenience of explanation, the mobile station apparatus 1-1, the base station apparatus 3-1, and the base station apparatus 3-2 of the embodiment have been described by referring to the functional block diagrams. A program to implement the functions or part of the functions of the mobile station apparatus 1-1, the base station apparatus 3-1, and the base station apparatus 3-2 may be recorded onto a computer readable recording medium, and the program recorded on the recording medium may be read onto a computer system. The computer system executes the program, thereby controlling the mobile station apparatus and the base station apparatus. The term "computer system" includes an OS, and hardware, such as a peripheral device.

The "computer-readable recording medium" refers to a movable medium, such as a flexible disk, a magneto-optical disk, ROM, or CD-ROM, and a storage device built in the computer system, such as a hard disk. The "computer-readable recording medium" may further include an entity, storing dynamically the program for a short period of time, such as a communication line that transmits the program via a communication network, like a network such as the Internet or a telephone network. The "computer-readable recording medium" may also include an entity, storing the program for a predetermined period of time, such as a volatile memory in the computer system that serves as a server or a client. The program may implement part of the above-described function, and may implement the function in cooperation with a program recorded on the computer system.

Each of the functional blocks in the embodiment may be implemented using an integrated circuit, such as LSI. The functional blocks may be individually incorporated into processors. Whole or part of the functional blocks may be integrated and then incorporated into a processor. The integration is not limited to LSI. A dedicated circuit or a general-purpose processor may be used. A new integration technique substituting for the LSI may become available with the advance of the semiconductor technology. An integrated circuit developed with such a new integration technique may also be used.

The embodiment of the present invention has been described in detail with reference to the drawings. The present invention is not limited to the above-described specific embodiment. A variety of design modifications are possible without departing the scope of the present invention.

### Industrial Applicability

The embodiment of the present invention finds applications in a wireless communication system, a base station apparatus, a terminal apparatus, a wireless communication method, and an integrated circuit, in which an efficient change of cells is to be performed between the base station apparatuses, and between the base station apparatus and the mobile station apparatus.

**Reference Signs List**

| | |
|---|---|
| 1-1 through 1-3 | Mobile station apparatuses |
| 3-1 and 3-2 | Base station apparatuses |
| 5 | RRH |
| 101 and 201 | Data generating units |
| 103 and 203 | Transmission data storage units |
| 105 and 205 | Transmission HARQ processing units |
| 107 and 207 | Transmission processing units |
| 109 and 209 | Wireless units |
| 111 and 211 | Reception processing units |
| 113 and 213 | Reception HARQ processing units |
| 115 and 215 | MAC information extracting units |
| 117 and 217 | PHY controllers |
| 119 and 219 | MAC controllers |
| 121 and 221 | Data processing units |
| 123 and 223 | RRC controllers |
| 225 | Inter-base-station apparatus communication unit |
| 227 | MME communication unit |
| 229 | GW communication unit |

## Claims

1. A wireless communication system comprising a first base station apparatus, a second base station apparatus, and a terminal apparatus, each of the first base station apparatus and the second base station apparatus communicating with the terminal apparatus via a plurality of cells,
wherein the first base station apparatus notifies the second base station apparatus of a message that indicates a connection change request to change a connection destination of the terminal apparatus from the second base station apparatus to a third base station apparatus;
wherein upon receiving the message indicating the connection change request, the second base station apparatus notifies the third base station apparatus of a connection request to connect to the terminal apparatus; and
wherein the second base station apparatus determines whether to include terminal information of the terminal apparatus in the message indicating the connection request, based information included in the message indicating the connection change request.

2. The wireless communication system according to Claim 1, wherein the second base station apparatus determines whether to include encryption key information in the message indicating the connection request based on the information included in the message indicating the connection change request.

3. A base station apparatus that, together with a first base station, communicates with a terminal apparatus via a plurality of cells,
wherein the base station apparatus notifies the first base station apparatus of a message indicating a connection change request to change a connection destination of the terminal apparatus from the first base station apparatus to a second base station apparatus; and
wherein the base station apparatus includes, in the message, information as to whether to notify the second base station apparatus of terminal information.

4. A base station apparatus that, together with a first base station apparatus, communicates with a terminal apparatus via a plurality of cells,
wherein upon receiving from the first base station apparatus a message indicating a connection change request to change a connection destination of the terminal apparatus from the base station apparatus to a second base station apparatus, the base station apparatus notifies the second base station apparatus of a message indicating a connection request to connect to the terminal apparatus; and
wherein the base station apparatus determines whether to include terminal information in the message indicating the connection request based on information included in the message indicating the connection change request.

5. A terminal apparatus that communicates with each of a first base station apparatus and a second base station apparatus via a plurality of cells,
wherein upon receiving a hand-over instruction message indicating a change of a cell of the first base station apparatus, the terminal apparatus resets a parameter of a MAC layer related to the cell of the first base station apparatus, but does not reset a parameter of the MAC layer related to a cell of the second base station apparatus.

6. A wireless communication method of a wireless communication system including a first base station apparatus, a second base station apparatus, and a terminal apparatus, each of the first base station apparatus and the second base station apparatus communicating with the terminal apparatus via a plurality of cells, comprising:
a step of the first base station apparatus of notifying the second base station apparatus of a message that indicates a connection change request to change a connection destination of the terminal apparatus from the second base station apparatus to a third base station apparatus;
a step of the second base station apparatus of notifying the third base station apparatus of a connection request to connect to the terminal apparatus, in response to receiving the message indicating the connection change request; and
a step of the second base station apparatus of determining whether to include terminal information of the terminal apparatus in the message indicating the connection request, based information included in the message indicating the connection change request.

7. An integrated circuit to be applied to a base station apparatus that, together with a first base station apparatus, communicates with a terminal apparatus via a plurality of cells, comprising:
a unit that notifies the first base station apparatus of a message indicating a connection change request to change a connection destination of the terminal apparatus from the first base station apparatus to a second base station apparatus; and
a unit that includes, in the message, information as to whether to notify the second base station apparatus of terminal information.

8. An integrated circuit to be applied to a base station apparatus that, together with a first base station apparatus, communicates with a terminal apparatus via a plurality of cells, comprising:
a unit that notifies a second base station apparatus of a message indicating a connection request to connect to the terminal apparatus, in response to receiving from the first base station apparatus a message indicating a connection change request to change a connection destination of the terminal apparatus from the base station apparatus to the second base station apparatus; and
a unit that determines whether to include terminal information in the message indicating the connection request based on information included in the message indicating the connection change request.

9. An integrated circuit to be applied to a terminal apparatus that communicates with each of a first base station apparatus and a second base station apparatus via a plurality of cells, comprising:
a unit that resets a parameter of a MAC layer related to a cell of the first base station apparatus, in response to receiving a hand-over instruction message indicating a change of the cell of the first base station apparatus, and a unit that does not reset a parameter of the MAC layer related to a cell of the second base station apparatus in response to receiving the hand-over instruction message indicating the change of the cell of the first base station apparatus.
